# EUROPÄISCHE PATENTSCHRIFT

(11) **EP 3 575 898 B1**
(45) Veröffentlichungstag und Bekanntmachung des Hinweises auf die Patenterteilung: **04.08.2021**
(21) Anmeldenummer: 18175553.9
(22) Anmeldetag: 01.06.2018
(51) Int. Cl.: G05B 19/042, G05B 19/05, G05B 19/418, H04L 12/46

(54) **SPEICHERPROGRAMMIERBARE STEUERUNG UND BETRIEBSVERFAHREN FÜR VIRTUELLE SPEICHERPROGRAMMIERBARE STEUERUNG UND COMPUTERPROGRAMMPRODUKT**
PROGRAMMABLE LOGIC CONTROLLER AND OPERATING SYSTEM FOR VIRTUAL PROGRAMMABLE LOGIC CONTROLLER AND COMPUTER PROGRAM PRODUCT
CONTRÔLEUR PROGRAMMABLE À LOGIQUE ET SYSTEME D'OPERATION POUR CONTRÔLEUR PROGRAMMABLE ET PROGRAMME INFORMATIQUE

(43) Veröffentlichungstag der Anmeldung: 04.12.2019
(73) Patentinhaber: Selectron Systems AG, 3250 Lyss (CH)
(72) Erfinder: SCHÖNI, Ulrich, 3063 Ittigen (CH); FELSER, Christoph, 3280 Murten (CH); GEISSBÜHLER, Bernhard, 3250 Lyss (CH); LILLICH, Joachim, 4515 Oberdorf (CH); ORDITZ, Jonathan, 2605 Sonceboz-Sombeval (CH); KURTH, Martin, 4573 Lohn-Ammannsegg (CH); MARTIG, Ralph, 3008 Bern (CH)
(74) Vertreter: Prüfer & Partner mbB Patentanwälte · Rechtsanwälte

(56) Entgegenhaltungen:
- EP-A1- 2 790 101
- EP-A1- 2 985 663
- EP-A1- 3 104 234
- WO-A1-2014/051579
- WO-A1-2014/204635
- WO-A1-2015/124320
- US-A1- 2016 033 962

## Beschreibung

Die vorliegende Erfindung betrifft eine speicherprogrammierbare Steuerung, ein Verfahren zum Betrieb einer speicherprogrammierbaren Steuerung und ein Computerprogrammprodukt. Insbesondere betrifft die Erfindung eine speicherprogrammierbare Steuerung und ein Betriebsverfahren für eine speicherprogrammierbare Steuerung zum Parallelbetrieb einer Vielzahl von SPS-Applikationen auf einer speicherprogrammierbaren Steuerung.

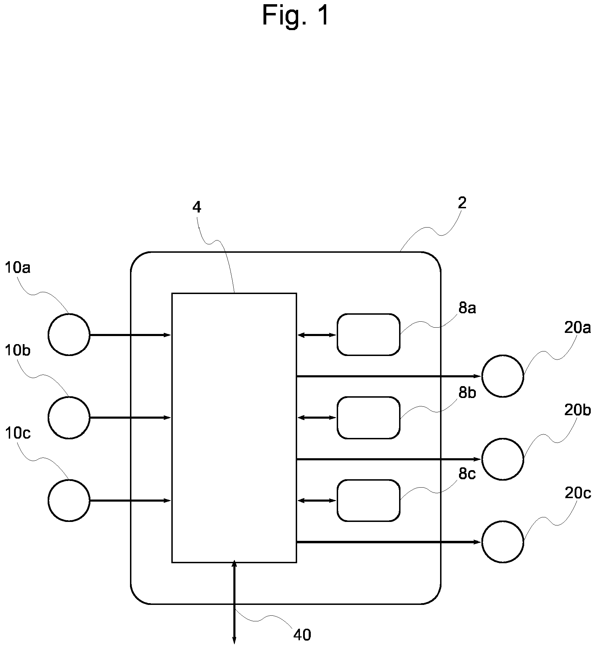

In der Automatisierungstechnik werden heute vielfach SPS (Speicherprogrammierbare Steuerungen, Englisch: PLC Programmable Logic Controller) eingesetzt. Eine SPS, beispielshaft dargestellt in Fig. 1, ist eine elektronische Datenverarbeitungsvorrichtung 2 mit einem oder mehreren Eingängen 10a, 10b, 10c, die aus Sensoren gespeist werden, wie Lichtschranken oder Temperaturfühler, einem oder mehreren Ausgängen 20a, 20b, 20c, die Aktoren speisen, wie beispielsweise Schütze zum Einschalten von Elektromotoren und Ventilen, einer Datenverarbeitungseinheit 4, einem Betriebssystem ("Firmware") für die Datenverarbeitungseinheit, einem Speicherbereich für Anwenderprogramme ("Applikation") 8a, 8b, 8c und einer Schnittstelle 40 zur Datenübertragung. Das Betriebssystem stellt bei Bestromung die Arbeitsbereitschaft der speicherprogrammierbaren Steuerung her und erlaubt das Übermitteln eines Anwenderprogramms an die speicherprogrammierbare Steuerung über die Schnittstelle. In einem durch das Betriebssystem kontrollierten Arbeitszyklus wird zu einem Zeitpunkt ein definiertes Abbild der Eingangszustände 10a, 10b, 10c erfasst, durch das Anwenderprogramm verarbeitet und in Abhängigkeit von dem Eingangszustandabbild und dem Anwenderprogramm ein Abbild der erwünschten Ausgangszustände 20a, 20b, 20c erzeugt. Am Zyklusende werden die Ausgänge 20a, 20b, 20c entsprechend dem Abbild geschaltet. Das Anwenderprogramm wird von einem Endanwender der speicherprogrammierbaren Steuerung üblicherweise mittels einer Programmiersprache nach IEC 61131 programmiert.

Bei modernen speicherprogrammierbaren Steuerungen erfolgt die Anbindung der speicherprogrammierbaren Steuerung an die Sensoren und Aktoren zunehmend nicht mehr über diskrete Leitungen, sondern über einen Feldbus beispielsweise nach IEC 61158. Ferner werden zunehmend auch Teile der speicherprogrammierbaren Steuerung wie Eingangs- und Ausgangsbaugruppen mittels Bus-Systemen an eine zentrale Datenverarbeitungseinheit angebunden.

Moderne speicherprogrammierbare Steuerungen erlauben die parallele Abarbeitung mehrerer SPS-Zyklen (Multitasking, ein Zyklus entspricht einer Task). Dies ermöglicht die getrennte Implementierung verschiedener Aufgaben. Dabei kann jede Task eine andere Zykluszeit und ein anderes Sicherheitslevel (SIL-Level) aufweisen. Diese parallele Abarbeitung von Zyklen setzt aber voraus, dass bei ihrer Erstellung die gleichen Versionen der Entwicklungsumgebungen und die gleichen Software-Bibliotheken verwendet wurden, was letztendlich darauf hinaus läuft, dass sie in der gleichen Entwicklungsumgebung erstellt werden.

In komplexen Umgebungen ist es jedoch üblich, dass unterschiedliche Funktionen oder Subsysteme von unterschiedlichen Unternehmen entwickelt und beigesteuert werden. Beispielsweise in Schienenfahrzeugverbünden ist es nicht unüblich, dass beispielsweise das Subsystem der Zugsteuerung von einem Unternehmen und das Subsystem der Bremsenkontrolle von einem anderen Unternehmen beigetragen wurden. Da in solch einer Umgebung bei einer subsystemübergreifenden Nutzung einer speicherprogrammierbaren Steuerung der Abstimmungsaufwand zwischen den beteiligten Unternehmen hoch ist, wird im Stand der Technik üblicherweise für jedes Subsystem oder zumindest für die von einem Unternehmen beigetragenen Subsysteme eine eigene speicherprogrammierbare Steuerung eingesetzt.

Dies erhöht die Systemkomplexität und die Kosten.

Die Druckschrift WO 2015/124320 A1 offenbart ein dynamisches speicherprogrammierbares Steuergerät für den Einsatz in einem Prozessleitsystem, umfassend mindestens eine feldseitige E/A-Schnittstelle zur Steuerung von mindestens einem Feldgerät, einen beschreibbaren Datenspeicher, mindestens einen Prozessor zur Ausführung darauf gespeicherter Software sowie eine Programmierschnittstelle zur Übertragung ausführbarer Software über eine Programmierstation auf den Datenspeicher, wobei der mindestens eine Prozessor die Hardware mindestens eines zugrundeliegenden speicherprogrammierbaren Steuergerätes emuliert, wobei das hierdurch erzeugte mindestens eine virtuelle speicherprogrammierbaren Steuergerät Zugriff auf die mindestens eine feldseitige E/A-Schnittstelle besitzt. Der Vorteil der Erfindung besteht darin, dass ein Austausch von virtueller Hardware stattfinden kann, ohne physisch in das Prozessleitsystem einzugreifen, und dass alte bzw. veraltete Hardware durch das erfindungsgemäße dynamische speicherprogrammierbare Steuergerät zu Entwicklungszwecken emuliert werden kann. Damit offenbart die Druckschrift eine speicherprogrammierbare Steuerung, die eine Datenverarbeitungseinheit, mindestens einen Eingang, mindestens einen Ausgang, mindestens einen Speicherbereich für Anwendungsprogramme aufweist, wobei die speicherprogrammierbare Steuerung eingerichtet ist, im Betrieb mittels eines Betriebssystems mindestens eine virtuelle speicherprogrammierbare Steuerung bereitzustellen, auf der ein Anwendungsprogramm lauffähig ist, die speicherprogrammeirbare Steuerung einen zweiten Speicherbereich für Anwendungsprogramme aufweist und eingerichtet ist, im Betrieb mittels des Betriebssystems eine zweite speicherprogrammierbare Steuerung bereitzustellen, wobei die erste virtuelle speicherprogrammierbare Steuerung und die zweite virtuelle speicherprogrammierbare Steuerung jeweils ein Anwendungsprogramm parallel und gekapselt voneinander ablaufen zu lassen.

Daher liegt der vorliegenden Erfindung die Aufgabe zugrunde, ein Verfahren zu schaffen, eine speicherprogrammierbare Steuerung, ein Verfahren zum Betrieb einer speicherprogrammierbaren Steuerung und ein Computerprogrammprodukt bereitzustellen, das erlaubt, die Systemkomplexität und die Kosten zu reduzieren.

Diese Aufgabe wird durch eine speicherprogrammierbare Steuerung nach Anspruch 1, ein Verfahren nach Anspruch 4 und ein Computerprogrammprodukt nach Anspruch 7 gelöst.

Weitere vorteilhafte Entwicklungen der Erfindung sind Gegenstand der abhängigen Ansprüche. Offenbart wird eine speicherprogrammierbare Steuerung, die aufweist: eine Datenverarbeitungseinheit, mindestens einen Eingang, mindestens einen Ausgang, mindestens einen Speicherbereich für Anwendungsprogramme, wobei die speicherprogrammierbare Steuerung eingerichtet ist, im Betrieb mittels eines Betriebssystems mindestens eine virtuelle speicherprogrammierbare Steuerungen bereitzustellen, auf der ein Anwendungsprogramm lauffähig ist.

Vorzugsweise weist die speicherprogrammierbare Steuerung einen zweiten Speicherbereich für Anwendungsprogramme auf, und ist eingerichtet, im Betrieb mittels des Betriebssystems eine zweite speicherprogrammierbare Steuerung bereitzustellen, wobei die erste virtuelle speicherprogrammierbare Steuerung und die zweite virtuelle speicherprogrammierbare Steuerung jeweils ein Anwendungsprogramm parallel und gekapselt voneinander ablaufen lassen.

Vorzugsweise ist die speicherprogrammierbare Steuerung eingerichtet, einen virtuellen Feldbus zu simulieren, der als Schnittstelle zwischen der mindestens einen virtuellen speicherprogrammierbaren Steuerung und der zweiten virtuellen speicherprogrammierbaren Steuerung dient.

Offenbart ist die speicherprogrammierbare Steuerung, wobei die Anbindung der speicherprogrammierbaren Steuerung an die Sensoren oder Aktoren vorzugsweise über einen Feldbus erfolgt.

Offenbart ist die speicherprogrammierbare Steuerung, wobei die Anbindung der Datenverarbeitungseinheit (4) an Eingangsbaugruppen oder Ausgangsbaugruppen vorzugsweise über einen Bussystem erfolgt.

Offenbart ist ein Verfahren zum Betrieb einer speicherprogrammierbare Steuerung, das die Schritte aufweist: Aufteilen der Betriebsmittel einer speicherprogrammierbaren Steuerung in mindestens eine virtuelle speicherprogrammierbare Steuerung, Ausführen von mindestens einem Anwendungsprogramm auf der virtuellen speicherprogrammierbaren Steuerung.

Bei dem Verfahren zum Betrieb einer speicherprogrammierbare Steuerung werden die Betriebsmittel vorzugsweise in mindestens zwei virtuelle speicherprogrammierbare Steuerungen aufgeteilt und mindestens zwei Anwendungsprogramme werden auf den mindestens zwei virtuellen speicherprogrammierbaren Steuerungen ausgeführt.

Bei dem Verfahren zum Betrieb einer speicherprogrammierbaren Steuerung werden die Anwendungsprogramme vorzugsweise unabhängig voneinander gestaltet.

Bei dem Verfahren zum Betrieb einer speicherprogrammierbaren Steuerung werden die virtuellen speicherprogrammierbaren Steuerungen unabhängig voneinander programmiert.

Vorzugsweise weist das Verfahren ferner den Schritt auf: Simulieren eines virtuellen Feldbusses, wobei die mindestens zwei virtuellen speicherprogrammierbaren Steuerungen über den virtuellen Feldbus miteinander kommunizieren können.

Offenbart wird ein Computerprogrammprodukt, das eine speicherprogrammierbare Steuerung so steuert, dass ein Verfahren nach einem der Ansprüche 6 bis 10 ausgeführt wird.

Ein Ausführungsbeispiel für das Verfahren gemäß der vorliegenden Erfindung wird anhand der nachfolgend aufgeführten Figuren erläutert. Hierbei ist das Ausführungsbeispiel als beispielhafte Implementierung des erfindungsgemäßen Verfahrens vorgesehen, das den Erfindungsgegenstand, wie er in den Ansprüchen definiert ist, nicht einschränkt.
Fig. 1 zeigt eine speicherprogrammierbare Steuerung aus dem Stand der Technik;
Fig. 2 zeigt eine speicherprogrammierbare Steuerung nach einem Ausführungsbeispiel der vorliegenden Erfindung.

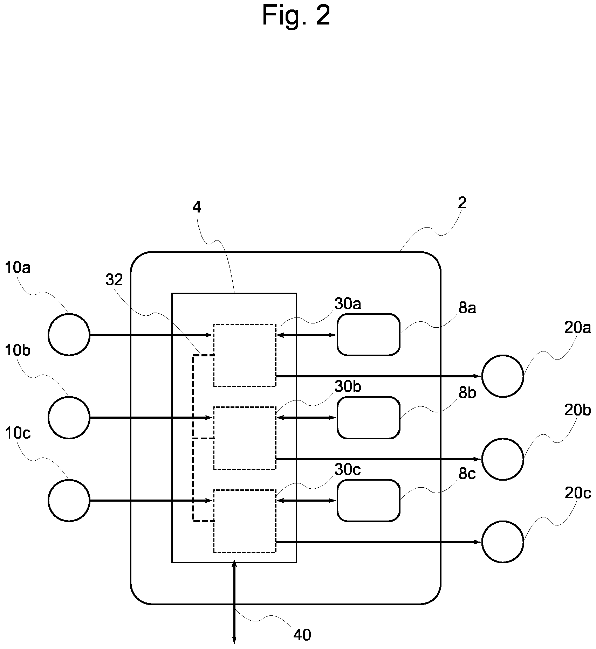

Fig. 2 zeigt ein Ausführungsbeispiel einer erfindungsgemäßen speicherprogrammierbaren Steuerung 2, die eine Datenverarbeitungseinheit 4 (CPU) und Speicherbereiche 8a, 8b, 8c für mehrere Anwendungsprogramme aufweist. Die speicherprogrammierbare Steuerung 2 weist ferner eine Schnittstelle 40 auf.

Die speicherprogrammierbare Steuerung 2 weist ferner Eingängen 10a, 10b, 10c auf. An den Eingängen 10a, 10b, 10c können Eingangssignale anliegen. An den Eingängen 10a, 10b, 10c können externe Sensoren (nicht gezeigt), wie Lichtschranken, Drehzahlgeber oder Temperaturfühler angeschlossen sein.

Die speicherprogrammierbare Steuerung 2 weist ferner Ausgänge 20a, 20b, 20c auf. An den Ausgängen 20a, 20b, 20c können durch die speicherprogrammierbare Steuerung 2 Ausgangssignale angelegt werden. An den Ausgängen 20a, 20b, 20c können externe Aktoren (nicht gezeigt), wie Schütze zum Einschalten von Elektromotoren und Ventilen angeschlossen sein.

Die speicherprogrammierbare Steuerung 2 ist mit einem Betriebssystem ("Firmware") versehen, das bei Bestromung die Arbeitsbereitschaft der speicherprogrammierbaren Steuerung herstellt und erlaubt das Übermitteln der Anwenderprogramme an die Speicherbereiche 8a, 8b, 8c der speicherprogrammierbaren Steuerung 2 über die Schnittstelle 40. Die speicherprogrammierbare Steuerung erlaubt das parallele Abarbeiten mehrerer Tasks.

Ferner stellt das Betriebssystem eine Abstraktionsschicht bereit, die den parallelen Betrieb mehrerer virtueller speicherprogrammierbarer Steuerungen 30a, 30b, 30c erlaubt. Hierbei simuliert die speicherprogrammierbare Steuerung 2 mittels des Betriebssystems über einen oder mehrere Tasks eine oder mehrere virtuelle speicherprogrammierbare Steuerungen 30a, 30b, 30c. Diese stellen jeweils einem Anwendungsprogramm Schnittstellen und Betriebsmittel in der Form bereit, dass das Anwendungsprogramm auf diese Schnittstellen und Betriebsmittel so zugreifen kann, als würde das Anwendungsprogramm direkt auf der speicherprogrammierbare Steuerung 2 ausgeführt werden und nicht in einer virtuellen speicherprogrammierbare Steuerung 30a, 30b, 30c. Da die virtuellen speicherprogrammierbaren Steuerungen 30a, 30b, 30c eine abgeschlossene speicherprogrammierbare Steuerung simulieren, sind die Anwendungsprogramme 8a, 8b, 8c bei ihrer Ausführung voneinander gekapselt und können sich gegenseitig nicht direkt beeinflussen. Dies erlaubt den Parallelbetrieb mehrerer Anwendungsprogramme, die lediglich daran angepasst sind, auf einer bestimmten speicherprogrammierbaren Steuerung abzulaufen. Aufgrund der Kapselung in den virtuellen speicherprogrammierbaren Steuerungen ist es nicht erforderlich, dass die Anwendungsprogramme weitere Anpassungen aneinander, wie gleiche Version oder die Verwendung gleicher Softwarebibliotheken benötigen. Alle virtuellen speicherprogrammierbaren Steuerungen können unabhängig voneinander bedient und programmiert werden. Aus Sicht des Anwendungsprogramms unterscheidet sich die virtuelle speicherprogrammierbare Steuerung nicht von einer herkömmlichen speicherprogrammierbaren Steuerung. Jedes Anwendungsprogramm wird über eine eigene virtuelle speicherprogrammierbare Steuerung 30a, 30b, 30c ausgeführt. Das Anwendungsprogramm kann daher in üblicher Weise entwickelt werden, wobei die Schnittstellen zwischen den verschiedenen Systemen unverändert bleiben.

In einem durch das Betriebssystem kontrollierten Arbeitszyklus wird zu einem Zeitpunkt ein definiertes Abbild der Eingangszustände 10a, 10b, 10c erfasst, durch das Anwenderprogramm verarbeitet und in Abhängigkeit von dem Eingangszustandabbild und dem Anwenderprogramm ein Abbild der erwünschten Ausgangszustände 20a, 20b, 20c erzeugt. Am Zyklusende werden die Ausgänge 20a, 20b, 20c entsprechend dem Abbild geschaltet. Das Anwenderprogramm wird von einem Endanwender der speicherprogrammierbaren Steuerung üblicherweise mittels einer Programmiersprache nach IEC 61131 programmiert.

Das Betriebssystem simuliert auf der speicherprogrammierbaren Steuerung einen virtuellen Feldbus 32 nach IEC 61158, der als Schnittstelle zwischen den virtuellen speicherprogrammierbaren Steuerungen 30a, 30b, 30c dient.

Damit ist es möglich, unterschiedliche Anwendungsprogramme für verschiedene Subsysteme auf einer einzigen speicherprogrammierbaren Steuerung 2 unabhängig voneinander auszuführen. Damit können beispielsweise die Funktion der Fahrzeugsteuerung und die Funktion des Bremssteuerrechners eines Schienenfahrzeugverbunds auf einer speicherprogrammierbaren Steuerung zusammen ausgeführt werden, auch wenn diese von unterschiedlichen Herstellern bereitgestellt werden.

Mit diesem Konzept ist es möglich SPS-Applikationen für verschiedene Subsysteme auf einer einzigen Hardware unabhängig voneinander auszuführen. Als Bespiel können die Funktion der Fahrzeugsteuerung und die Funktion des Bremsrechners auf einer Hardware zusammen ausgeführt werden. Die SPS-Applikationen können wie üblich entwickelt werden und die Schnittstellen zwischen den verschiedenen Subsystemen bleiben gleich.

Die Vorteile des Konzepts der vorliegenden Erfindung bestehen somit darin, dass auf einer Hardware mehrere SPS-Applikationen ausgeführt werden können, ohne dass hierzu der Aufbau der SPS-Applikationen angepasst werden muss.

Bei der speicherprogrammierbaren Steuerung 2 kann die Anbindung der speicherprogrammierbaren Steuerung 2 an die Sensoren und Aktoren nicht nur über diskrete Leitungen, sondern auch über einen Feldbus beispielsweise nach IEC 61158 erfolgen.

Ferner können auch Teile der speicherprogrammierbaren Steuerung 2 wie Eingangs- und Ausgangsbaugruppen mittels Bus-Systemen an die zentrale Datenverarbeitungseinheit 4 angebunden sein.

Im Ausführungsbeispiel weist die speicherprogrammierbare Steuerung 2 eine Datenverarbeitungseinheit 4 (CPU) auf. Alternativ kann die speicherprogrammierbare Steuerung aus dem Ausführungsbeispiel mehrere Datenverarbeitungseinheiten, insbesondere zwei, vier oder acht Datenverarbeitungseinheiten aufweisen. In diesem Fall verteilen sich die mehreren virtuellen speicherprogrammierbaren Steuerungen auf die Datenverarbeitungseinheiten.

Weitere Abwandlungen der Erfindung innerhalb des Umfangs der Patentansprüche sind möglich.

Die Junktoren ... "und", "oder" und "entweder ... oder" werden in der Bedeutung verwendet, die an die logische Konjunktion, die logische Adjunktion (oft "und/oder"), bzw. die logische Kontravalenz angelehnt sind.

### BEZUGSZEICHENLISTE

- 2: SPS-Hardware
- 4: CPU
- 8a, 8b, 8c: SPS-Applikation
- 10a, 10b, 10c: Eingang
- 20a, 20b, 20c: Ausgang
- 30a, 30b, 30c: virtuelle speicherprogrammierbare Steuerung
- 32: virtueller Feldbus
- 40: Schnittstelle

## Patentansprüche

1. Eine speicherprogrammierbare Steuerung (2), die aufweist:
eine Datenverarbeitungseinheit (4)
mindestens einen Eingang (10),
mindestens einen Ausgang (20),
mindestens einen Speicherbereich (8a) für Anwendungsprogramme,
wobei die speicherprogrammierbare Steuerung (2)
eingerichtet ist, im Betrieb mittels eines Betriebssystems mindestens eine virtuelle speicherprogrammierbare Steuerung (30a) bereitzustellen, auf der ein Anwendungsprogramm lauffähig ist,
einen zweiten Speicherbereich (8b) für Anwendungsprogramme aufweist, und
eingerichtet ist, im Betrieb mittels des Betriebssystems eine zweite speicherprogrammierbare Steuerung (30b) bereitzustellen,
wobei die erste virtuelle speicherprogrammierbare Steuerung (30a) und die zweite virtuelle speicherprogrammierbare Steuerung (30b) eingerichtet sind, jeweils ein Anwendungsprogramm parallel und gekapselt voneinander ablaufen zu lassen,
und die speicherprogrammierbare Steuerung (2) **dadurch gekennzeichnet ist,**
**dass** sie eingerichtet ist, einen virtuellen Feldbus zu simulieren, der als Schnittstelle zwischen der mindestens einen virtuellen speicherprogrammierbaren Steuerung (30a) und der zweiten virtuellen speicherprogrammierbaren Steuerung (30b) dient.

2. Die speicherprogrammierbare Steuerung (2) nach Anspruch 1, wobei die Anbindung der speicherprogrammierbaren Steuerung (2) an die Sensoren oder Aktoren über einen Feldbus erfolgt.

3. Die speicherprogrammierbare Steuerung (2) nach einem der Ansprüche 1 und 2, wobei die Anbindung der Datenverarbeitungseinheit (4) an Eingangsbaugruppen oder Ausgangsbaugruppen über einen Bussystem erfolgt.

4. Verfahren zum Betrieb einer speicherprogrammierbaren Steuerung (2), das die Schritte aufweist:
Aufteilen der Betriebsmittel einer speicherprogrammierbaren Steuerung (2) in mindestens zwei virtuellen speicherprogrammierbaren Steuerungen (30a, 30b),
Ausführen von mindestens einem Anwendungsprogramm auf den mindestens zwei virtuellen speicherprogrammierbaren Steuerungen (30a, 30b), und ferner der Schritt aufgewiesen wird:
Simulieren eines virtuellen Feldbusses (32), wobei die mindestens zwei virtuellen speicherprogrammierbaren Steuerungen (30a, 30b) über den virtuellen Feldbus (32) miteinander kommunizieren können.

5. Das Verfahren zum Betrieb einer speicherprogrammierbare Steuerung (2) nach Anspruch 4, wobei die Anwendungsprogramme unabhängig voneinander gestaltet werden.

6. Das Verfahren nach einem der Ansprüche 4 und 5, wobei die virtuellen speicherprogrammierbaren Steuerungen (30a, 30b) unabhängig voneinander programmiert werden.

7. Computerprogrammprodukt, das eine speicherprogrammierbare Steuerung so steuert, dass ein Verfahren nach einem der Ansprüche 4 bis 6 ausgeführt wird.

## Claims

1. Programmable logic controller (2) that has:
a data processing unit (4)
at least one input (10),
at least one output (20),
at least one memory area (8a) for application programs,
wherein the programmable logic controller (2)
is designed so as, during operation by means of an operating system, to provide at least one virtual programmable logic controller (30a) on which an application program is able to run,
has a second memory area (8b) for application programs, and
is designed so as, during operation by means of the operating system, to provide a second programmable logic controller (30b),
wherein the first virtual programmable logic controller (30a) and the second virtual programmable logic controller (30b) are designed to each run an application program in parallel and in a manner encapsulated from one another,
and the programmable logic controller (2) is **characterized**
**in that** it is designed to simulate a virtual field bus that serves as interface between the at least one virtual programmable logic controller (30a) and the second virtual programmable logic controller (30b).

2. Programmable logic controller (2) according to Claim 1, wherein the connection of the programmable logic controller (2) to the sensors or actuators is made via a field bus.

3. Programmable logic controller (2) according to either of Claims 1 and 2, wherein the connection of the data processing unit (4) to input modules or output modules is made via a bus system.

4. Method for operating a programmable logic controller (2), which has the steps of:
dividing the resources of a programmable logic controller (2) into at least two virtual programmable logic controllers (30a, 30b),
executing at least one application program on the at least two virtual programmable logic controllers (30a, 30b),
and furthermore has the step of:
simulating a virtual field bus (32), wherein the at least two virtual programmable logic controllers (30a, 30b) can communicate with one another via the virtual field bus (32).

5. Method for operating a programmable logic controller (2) according to Claim 4, wherein the application programs are configured independently of one another.

6. Method according to either of Claims 4 and 5, wherein the virtual programmable logic controllers (30a, 30b) are programmed independently of one another.

7. Computer program product that controls a programmable logic controller such that a method according to one of Claims 4 to 6 is carried out.

## Revendications

1. Automate (2) programmable, qui a :
une unité (4) de traitement de données,
au moins une entrée (10),
au moins une sortie (20),
au moins une partie (8a) de mémoire pour des programmes d'application,
dans lequel l'automate (2) programmable
est conçu pour disposer en fonctionnement au moyen d'un système de fonctionnement d'au moins un automate (30a) programmable virtuel, sur lequel un programme d'application peut se dérouler,
a une deuxième partie (8b) de mémoire pour les programmes d'application, et
est conçu pour disposer en fonctionnement au moyen du système de fonctionnement d'un deuxième automate (30b) programmable,
dans lequel le premier automate (30a) programmable virtuel et le deuxième automate (30b) programmable virtuel sont conçus pour faire se dérouler respectivement, en parallèle et encapsulés l'un de l'autre, un programme d'application,
et l'automate (2) programmable est **caractérisé**
**en ce qu'**il est conçu pour simuler un bus sur site virtuel, qui sert d'interface entre le au moins un automate (30a) programmable virtuel et le deuxième automate (30b) programmable virtuel.

2. Automate (2) programmable suivant la revendication 1, dans lequel la liaison de l'automate (2) programmable aux capteurs ou aux actionneurs a lieu par un bus sur site.

3. Automate (2) programmable suivant l'une des revendications 1 et 2, dans lequel la liaison de l'unité (4) de traitement de données a des modules d'entrée ou a des modules de sortie s'effectue par un système de bus.

4. Procédé pour faire fonctionner un automate (2) programmable, qui a les stades :
subdivision du moyen de fonctionnement d'un automate (2) programmable en au moins deux automates (30a, 30b) programmables virtuels,
réalisation d'au moins un programme d'application sur les au moins deux automates (30a, 30b) programmables virtuels,
et ayant en outre le stade :
simulation d'un bus (2) sur site virtuel, les au moins deux automates (30a, 30b) programmables virtuels pouvant communiquer entre eux par le bus (32) sur site virtuel.

5. Procédé pour faire fonctionner un automate (2) programmable suivant la revendication 4, dans lequel les programmes d'application sont conformés indépendamment les uns des autres.

6. Procédé pour faire fonctionner un automate (2) programmable suivant l'une des revendications 4 et 5, dans lequel les automates (30a, 30b) programmables virtuels sont programmés indépendamment les uns des autres.

7. Produit de programme d'ordinateur, qui commande un automate programmable de manière à effectuer un procédé suivant l'une des revendications 4 à 6.
